**Europäisches Patentamt**

**European Patent Office**

**Office européen des brevets**

(19)

(11) Numéro de publication: **0 307 684 B1**

# (12) FASCICULE DE BREVET EUROPEEN

(45) Date de publication de fascicule du brevet: **07.01.93**

(51) Int. Cl.5: **C08L 23/02**, C08L 101/00, //(C08L23/02,101:00)

(21) Numéro de dépôt: **88113918.2**

(22) Date de dépôt: **26.08.88**

(54) **Compositions polyoléfiniques de propriétés rhéologiques modifiées et leur utilisation.**

(30) Priorité: **07.09.87 FR 8712405**

(43) Date de publication de la demande:
**22.03.89 Bulletin 89/12**

(45) Mention de la délivrance du brevet:
**07.01.93 Bulletin 93/01**

(84) Etats contractants désignés:
**AT BE CH DE ES FR GB GR IT LI LU NL SE**

(56) Documents cités:
**EP-A- 0 157 655**
**FR-A- 2 107 538**
**US-A- 3 975 463**
**US-A- 4 554 293**

(73) Titulaire: **SOLVAY**
**Rue du Prince Albert, 33**
**B-1050 Bruxelles(BE)**

(72) Inventeur: **Breulet, Jacques**
**Rue Georges Rency, 24**
**B-1200 Bruxelles(BE)**
Inventeur: **Charlier, Jean**
**Rue du Culot, 39**
**B-1341 Ceroux-Mousty(BE)**

(74) Mandataire: **Husemann, Claude et al**
**SOLVAY Département de la Propriété Indus-**
**trielle 310, Rue de Ransbeek**
**B-1120 Bruxelles(BE)**

EP 0 307 684 B1

## Description

La présente invention concerne des compositions polyoléfiniques de propriétés rhéologiques modifiées. Elle concerne plus particulièrement des compositions à base de polyoléfines dont les caractéristiques viscoélastiques ont été modifiées de manière à améliorer leur aptitude à être mises en oeuvre par les méthodes exigeant un comportement particulier d'étirabilité en fondu, telles que le calandrage, l'extrusion et le thermoformage. Elle concerne aussi l'utilisation de ces compositions polyoléfiniques pour le façonnage d'objets par les méthodes de calandrage, d'extrusion et de thermoformage.

Certaines méthodes de mise en oeuvre des polyoléfines exigent que ces dernières présentent des caractéristiques viscoélastiques qu'il est difficile de leur conférer simplement et économiquement au cours de la polymérisation. Ainsi, pour pouvoir être mises en oeuvre correctement à des vitesses ou cadences acceptables, par calandrage, par extrusion et par thermoformage notamment les polyoléfines doivent présenter des propriétés élongationnelles à l'état fondu convenables, en particulier une viscosité élongationnelle et un module d'élasticité en traction suffisamment élevés à gradient de vitesse faible. Les polyoléfines ne présentant pas ces caractéristiques viscoélastiques à des degrés suffisants engendrent des problèmes lors de la mise en oeuvre par ces méthodes : ruptures de paraison lors de l'extrusion; rotation irrégulière du bourrelet et adhérence aux cylindres lors du calandrage; déchirure et irrégularité de surface des objets au cours du thermoformage.

Le document FR-A-2107538 divulgue une composition de résine thermoplastique renforcée comprenant :

(I) 50 à 95 % en poids d'un composant résineux comprenant

(a) 1 à 99 % en poids d'une polyoléfine modifiée

(b) 99 à 1 % en poids d'un polyamide

(c) 0 à 98 % en poids d'une polyoléfine non modifiée.

(II) 5 à 50 % en poids d'une matière de renforcement en verre.

Selon le document cité, le but poursuivi est de fournir une composition de résine polyoléfine/polyamide, dans laquelle l'emploi d'une quantité importante d'une polyoléfine modifiée par un acide carboxylique non saturé assure une dispersion uniforme des fibres de verre et une bonne adhérence de celles-ci aux composants résineux (page 2, lignes 12-16).

Le document US-A-3975463 divulgue des compositions résineuses comprenant :

(A) 30 à 98 % en poids d'une polyoléfine cristalline

(B) 2 à 70 % en poids du produit de la saponification d'un copolymère éthylène-acétate de vinyle (EVOH) contenant 25 à 75 % molaires d'éthylène et de degré de saponification d'au moins 93 %

(C) 0,5 à 15 parties en poids par 100 parties en poids de (A) et de (B) d'un polymère thermoplastique contenant un groupe carbonyle.

L'objectif poursuivi selon le document cité est notamment d'obtenir des compositions résineuses conduisant à de bonnes caractéristiques de perméabilité aux gaz (colonne 2, lignes 54-59), obtenues par la création d'une structure multicouche (colonne 2, lignes 60-68).

On a déjà proposé (demande de brevet JA-A-122950/83 de IDEMITSU KOSAN résumée dans Chemical Abstracts, vol. 99, 1983, référence 99: 196073n) des compositions à base de polypropylène caractérisées notamment par une bonne aptitude au moulage, dans lesquelles le polypropylène de base est additionné de quantités importantes de polypropylène modifié par greffage au moyen d'acides ou anhydrides, éthyléniquement insaturés et, d'autre part, d'un copolymère saponifié d'éthylène et d'acétate de vinyle. Si les quantités d'additifs incorporés dans le polypropylène de base sont suffisamment élevées pour en modifier sensiblement les propriétés mécaniques, en particulier la rigidité, elles engendrent également des problèmes (défauts de surface des objets façonnés) liés à la mise en oeuvre de mélanges de polymères incompatibles et des problèmes d'adhérence aux moules liés à la présence du polypropylène modifié.

La présente invention vise dès lors à fournir des compositions à base de polyoléfines aptes à la mise en oeuvre par les méthodes nécessitant des caractéristiques viscoélastiques particulières sans présenter les inconvénients rencontrés dans l'art antérieur.

La présente invention concerne à cet effet des compositions polyoléfiniques comprenant une polyoléfine (A) et une combinaison polymérique (B) constituée (B1) d'une polyoléfine modifiée par greffage d'un monomère polaire et (B2) d'au moins un polymère porteur d'au moins une fonction réactive vis-à-vis du monomère polaire, la quantité de combinaison polymérique (B) étant comprise entre 0,05 et 1 % en poids par rapport au poids de la polyoléfine (A).

Les compositions polyoléfiniques selon l'invention contiennent une polyoléfine (A). Cette polyoléfine (A) est choisie parmi les polymères thermoplastiques résultant de l'homopolymérisation des oléfines à insaturation terminale dont la molécule contient de 2 à 20 atomes de carbone, de préférence de 2 à 8 atomes de carbone, spécialement l'éthylène, le propylène et le n-butène, et de la copolymérisation de ces oléfines entre elles ainsi qu'avec d'autres monomères copolymérisables avec elles. Ces autres monomères copolymérisables peuvent être, par exemple, des dioléfines telles que le butadiène, l'isoprène et les hexadiènes.

Les copolymères résultants peuvent être aussi bien des copolymères statistiques que des copolymères appelés "à blocs". Ces copolymères à blocs consistent en des successions de segments de chaîne de longueurs variables. Chaque segment consiste en un homopolymère d'une alpha-oléfine ou en un copolymère statistique comprenant deux ou plusieurs comonomères tels que définis ci-dessus.

Des polyoléfines (A) préférées pour la réalisation des compositions selon l'invention sont les polymères (homo- et copolymères) de l'éthylène et du propylène.

Outre la polyoléfine (A), les compositions selon l'invention comprennent aussi une combinaison polymérique (B) contenant une polyoléfine (B1) modifiée par greffage au moyen d'un monomère polaire. Cette polyoléfine (B1) comporte en plus d'unités monomériques dérivées d'alpha-oléfines, des unités dérivées de monomères polaires.

Les polyoléfines (B1) mises en oeuvre selon l'invention peuvent être de nature différente de ou identique à celle de la polyoléfine (A) dont on souhaite modifier les propriétés rhéologiques. Les mêmes définitions et limitations que celles relatives à la polyoléfine (A) sont donc d'application pour la polyoléfine (B1). De préférence, les polyoléfines (A) et (B1) sont dérivées du même monomère.

Les monomères polaires mis en oeuvre pour greffer les polyoléfines peuvent être n'importe quels composés organiques comprenant au moins une liaison insaturée, de préférence de type oléfinique, et au moins un groupe carboxylique éventuellement sous forme d'anhydride.

De préférence, on utilise des monomères comprenant de 3 à 12 atomes de carbone dans leur molécule. Ces monomères polaires peuvent être notamment des acides monocarboxyliques insaturés tels que les acides acrylique, méthacrylique ou chloroacrylique, ou des acides polycarboxyliques insaturés tels que les acides maléique, fumarique et itaconique, ou encore les anhydrides dérivés de ces acides tels que l'anhydride maléique. Les monomères polaires préférés sont les acides acrylique et méthacrylique et l'anhydride maléique. Les meilleurs résultats sont obtenus avec l'anhydride maléique.

Les polyoléfines modifiées (B1) peuvent être fabriquées par toutes les techniques connues de greffage telles que le greffage en solution, par irradiation ou en présence d'initiateurs, et le greffage par malaxage à l'état fondu, cette dernière technique étant préférée. La réaction de greffage est opérée avantageusement en présence de radicaux libres pouvant être générés par toutes les techniques connues à cet effet, telles que l'irradiation ou l'ozonisation. Habituellement, on opère à température élevée et, de préférence, en présence de composés libérant des radicaux libres sous l'action de la chaleur. Tout particulièrement, on préfère travailler en présence de composés peroxydés organiques ayant une température de décomposition supérieure à 130°C. Des exemples de composés peroxydés utilisables sont le 2,5 diméthyl-2,5 di(tert.-butylperoxy)hexane, le 2,5 diméthyl-2,5 di(tert.-butyl-peroxy) hexyne, les peroxydes de di-tert-butyle, de lauroyle et de benzoyle, l'hydroperoxyde de tert-butyle ainsi que le peroxyde de dicumyle.

De préférence, le greffage du monomère polaire sur la polyoléfine est réalisé en les malaxant à température supérieure au point de fusion de la polyoléfine, et en la présence éventuelle d'un composé générateur de radicaux libres, tel que ceux définis ci-dessus, dans les proportions et pendant le temps requis pour obtenir des teneurs en monomère polaire greffé comprises en général entre 0,001 et 5 % en poids de la polyoléfine.

Les combinaisons polymériques (B) contenues dans les compositions polyoléfiniques selon l'invention comprennent également au moins un polymère (B2) porteur d'au moins une fonction réactive vis-à-vis du monomère polaire greffé sur la polyoléfine (B1). Tous les polymères contenant au moins une telle fonction réactive conviennent pour la réalisation des compositions selon l'invention. La fonction réactive du polymère (B2) est généralement une fonction alcool ou une fonction amine. De préférence, il s'agit d'une fonction alcool. La teneur en fonctions réactives du polymère peut être très variable et n'est pas critique. Ainsi, le polymère peut être un polycondensat ne présentant qu'une seule fonction réactive par macromolécule ou un polymère d'addition contenant jusqu'à une fonction réactive par unité monomérique.

Parmi les polycondensats utilisables à titre de polymères (B2), on peut citer :

- les oligomères polyamides $\alpha$-$\omega$ diaminés obtenus par polycondensation, en présence d'une diamine, d'un monomère générateur de polyamide tel qu'un sel de diacide et de diamine, un aminoacide, un lactame.

Des exemples de pareils oligomères sont les oligomères de polyamide 11 ou 12 $\alpha$-$\omega$ diaminés;

- les polyoxyalkylène glycols tels que les polyoxyéthylène glycols, et les polyoxytétraméthylène glycols de différents poids moléculaire par exemple;

- les polymères de lactones telles que la $\epsilon$-caprolactone et la $\delta$-valérolactone; parmi ceux-ci, sont inclus également les copolymères de ces lactones avec d'autres monomères, pour autant que leur teneur en unités dérivées des lactones représente au moins 50 % molaires du copolymère; ces monomères peuvent être choisis parmi les oxydes d'oléfine, tel que l'oxyde d'éthylène ou l'oxyde de propylène par exemple; les lactames, tel que le caprolactame par exemple; et les mélanges d'un glycol tel que l'éthylène glycol et d'un diacide carboxylique acyclique tel que l'acide adipique par exemple.

Des polycondensats convenant particulièrement bien à titre de polymères (B2) pour des raisons d'accessibilité commerciale sont les homopolymères de masses molaires comprises entre environ 3000 et environ 50000 dérivés de la ε-caprolactone.

Les polymères d'addition utilisables à titre de polymères (B2), sont des polymères dérivés par addition de monomères contenant la fonction réactive souhaitée. Les polymères d'addition préférés sont ceux qui résultent de la polymérisation, suivie d'hydrolyse, de monomères vinyliques hydrolysables. On entend aussi désigner par cette définition, les polymères résultant de la copolymérisation, suivie d'hydrolyse de ces monomères avec d'autres monomères copolymérisables, tels que les monomères éthyléniquement insaturés comme l'éthylène par exemple. De préférence, le monomère vinylique hydrolysable est l'acétate de vinyle. A titre d'exemples de ces polymères d'addition, on peut citer les homopolymères d'alcool vinylique et les dérivés hydroxylés des copolymères éthylène-acétate de vinyle.

On préfère, pour des raisons d'accessibilité et de températures de mise en oeuvre, utiliser les dérivés hydroxylés commerciaux des copolymères éthylène-acétate de vinyle, contenant de 15 à 50 % en poids d'éthylène, et de préférence de 15 à 35 % en poids d'éthylène.

On a constaté que la modification la plus efficace des propriétés viscoélastiques de la polyoléfine (A) était conférée par l'incorporation de combinaisons polymériques dont le polymère (B1) est une polyoléfine de même nature greffée d'anhydride maléique et dont le polymère (B2) est choisi parmi les homopolymères de l'ε-caprolactone et les dérivés hydroxylés des copolymères éthylène-acétate de vinyle.

Une caractéristique essentielle des compositions selon l'invention est que la quantité de combinaison polymérique (B) qu'elles contiennent soit comprise entre 0,05 et 1 % en poids de la polyoléfine (A). L'incorporation de ces faibles quantités de combinaison polymérique (B) améliore de manière surprenante les propriétés viscoélastiques de la polyoléfine (A) dans les conditions opératoires rencontrées lors de la mise en oeuvre par extrusion, par calandrage et par thermoformage, sans engendrer aucun autre effet secondaire indésirable.

Les quantités respectives des constituants (B1) et (B2) de la combinaison polymérique (B) ne sont pas critiques. Elles sont généralement telles que le rapport molaire R, entre la concentration molaire en macromolécules contenues dans le polymère (B2) et la concentration en monomères polaires portés par la polyoléfine modifiée (B1) est compris entre 0,05 et 20 et, de préférence, entre 0,2 et 5. De très bons résultats sont obtenus lorsque (B1) et (B2) sont mis en oeuvre de manière a ce qu'une macromolécule de (B2) corresponde à environ un monomère polaire de (B1).

La concentration molaire en macromolécules contenues dans (B2) est le rapport entre la concentration en poids de polymère (B2) et le poids moléculaire moyen en nombre de ce polymère. Ce poids moléculaire moyen en nombre est défini par la relation $\overline{M}_n = \Sigma n_i M_i / \Sigma n_i$ dans laquelle $n_i$ représente le nombre de molécules de poids moléculaire $M_i$. Ce poids moléculaire moyen en nombre est déterminé de manière connue par les méthodes cryoscopique et ébullioscopique, par la méthode des groupes terminaux ou encore par osmométrie.

Avec les polymères (B2) les plus courants, on peut exprimer plus aisément ces proportions molaires en proportions en poids. Dans ces conditions, le rapport en poids entre les quantités de polyoléfine modifiée (B1) et de polymère (B2) à mettre en oeuvre pour fabriquer les compositions polyoléfiniques suivant l'invention est compris entre 0,01 et 10 et, de préférence, entre 0,2 et 5.

Outre les constituants (A), (B1) et (B2), les compositions polyoléfiniques selon l'invention peuvent contenir d'autres additifs conventionnels, non réactifs vis-à-vis du monomère polaire, tels que des stabilisants, des lubrifiants, des agents antistatiques, des agents de nucléation, des charges, des pigments, des colorants, des ignifugeants et des lubrifiants internes.

Les compositions polyoléfiniques selon l'invention peuvent être préparées par tous les moyens conventionnels par lesquels on procède à l'incorporation de faibles quantités d'ingrédients dans des polyoléfines. Les conditions opératoires de cette incorporation ne sont pas critiques pour autant qu'elles induisent une réaction chimique entre les constituants (B1) et (B2) de la combinaison polymérique (B).

Ainsi, on peut procéder au mélange entre eux des constituants (B1) et (B2) et incorporer ce mélange à la polyoléfine (A). On peut aussi mélanger séparément le constituant (B1) et le constituant (B2) avec la polyoléfine (A). On peut encore procéder au mélange des trois constituants (A), (B1) et (B2) des compositions polyoléfiniques entre eux.

Les compositions polyoléfiniques selon l'invention peuvent être préparées selon toutes les techniques de mélange connues des ingrédients, ceux-ci se trouvant à l'état solide ou à l'état fondu. Pour assurer l'homogénéité de la composition polyoléfinique et la bonne dispersion des constituants (B1) et (B2) dans la polyoléfine (A), on pratique généralement un malaxage à température supérieure à la température de fusion la plus élevée des constituants impliqués dans le mélange malaxé.

Le malaxage peut être réalisé par tout moyen connu à cet effet. Ainsi, on peut travailler indifféremment en malaxeurs du type externe ou du type interne. Les malaxeurs du type interne sont préférés, et plus particulièrement les extrudeuses qui constituent une classe particulière de malaxeurs internes. Le malaxage peut être effectué dans les conditions habituelles bien connues de l'homme de métier.

La température de malaxage n'est pas critique et est conditionnée par la nature et les températures de décomposition de la composition polyoléfinique. Généralement, on travaille à des températures ne dépassant pas 250°C.

La durée du malaxage est choisie en tenant compte de la nature des constituants polymériques de la composition polyoléfinique et de la température appliquée. Cette durée est généralement comprise entre 5 secondes et 60 minutes et le plus souvent entre 10 secondes et 15 minutes. On préfère travailler pendant des durées situées entre 30 secondes et 10 minutes.

Les caractéristiques rhéologiques en cisaillement des compositions polyoléfiniques suivant l'invention sont mesurées conventionnellement sur viscosimètre capillaire, par exploitation des pertes de charge et des gonflements mesurés lors de l'extrusion au travers d'un capillaire dont le rapport entre la longueur et le rayon est suffisamment élevé (par exemple 60)(voir C.D. HAN : Rheology in Polymer Processing, Academic Press, New-York - San Francisco - London, 1976, pages 89 à 163).

A partir des paramètres rhéologiques en cisaillement obtenus et des pertes de charge mesurées à l'entrée du capillaire, on peut isoler la composante élongationnelle de la viscosité par application de la théorie de Cogswell (voir POLYMER ENGINEERING SCIENCE, vol. 12, pages 64 et suivantes, 1972) et déterminer ainsi la viscosité élongationnelle $(\lambda)$ des compositions suivant l'invention en fonction du gradient de vitesse en traction $(\epsilon)$.

La détermination expérimentale et le calcul de ces divers paramètres sur les compositions polyoléfiniques selon l'invention conduisent à des valeurs qui reflètent leur aptitude améliorée à être transformées par les méthodes exigeant des composantes élongationnelles de la viscosité élevées à gradient de vitesse faible telles que le calandrage, l'extrusion comme l'extrusionsoufflage de films et le thermoformage.

Les exemples suivants servent à illustrer l'invention.

Exemple 1R

Cet exemple est donné à titre de comparaison.

Une extrudeuse monovis de laboratoire équipée d'une filière à jonc de 2 mm de diamètre a été alimentée par un copolymère à blocs du propylène et de l'éthylène d'indice de fluidité, mesuré selon la norme ASTM D1238 à 230°C sous 2,16 kg, égal à 0,82, commercialisé sous la dénomination ELTEX P RF 110 par SOLVAY & Cie.

Les conditions d'extrusion étaient les suivantes :

- vitesse de la vis :
82 tours/minute
- températures lues :
185°C dans la zone d'alimentation
220°C dans la zone de compression
228°C dans la zone de dosage.

La température de la matière fondue sortant la filière était égale à 222°C. Le jonc liquide a été ensuite refroidi et solidifié, puis granulé.

Les propriétés rhéologiques des granules de ce copolymère déterminées à partir de mesures effectuées à 230°C, suivant la méthode mentionnée plus haut étaient les suivantes :

- viscosité en cisaillement $\eta$ avec un gradient de cisaillement de 1 s$^{-1}$ $(\eta(1))$ = 11 000 Pa.s
- viscosité en cisaillement $\eta$ avec un gradient de cisaillement de 100 s$^{-1}$ $(\eta(100))$ = 800 Pa.s
- viscosité élongationnelle $\lambda$ avec un gradient d'étirage de 1 s$^{-1}$ $(\lambda(1))$ = 12 600 Pa.s
- viscosité élongationnelle $\lambda$ avec un gradient d'étirage de 50 s$^{-1}$ $(\lambda(50))$ = 9 900 Pa.s

L'aptitude au calandrage de ce copolymère a été évaluée à l'aide d'un micromalaxeur SCHWABENTHAN. Les températures des cylindres ont été réglées à 190°C, le taux de friction à 1,2 et la vitesse de rotation à 22 tours/minute, l'entrefer entre les deux cylindres étant réglé de telle façon que l'épaisseur du crêpe formé est compris entre 0,5 et 1 mm. La quantité de matière utilisée a été de 50 grammes et la matière était fondue après 1 minute. On a évalué le comportement de la matière fondue après 20 minutes de mise en oeuvre dans les conditions mentionnées ci-dessus.

Le copolymère se caractérise par un comportement médiocre au calandrage : rotation irrégulière du bourrelet, impossibilité d'extraire le crêpe de matière fondue de la calandre sans le déchirer et collage sur cylindres très rapide.

Exemple 1 (selon l'invention)

On a répété l'exemple 1R, si ce n'est qu'on a utilisé une composition constituée de :
- 100 parties en poids du copolymère ELTEX P RF 110 identifié à l'exemple 1R ;
- 0,1 partie en poids d'un polypropylène greffé commercialisé sous la dénomination ADMER QF500 par MITSUI PETROCHEMICAL INDUSTRIES
- 0,1 partie en poids d'un polycaprolactone commercialisé sous la dénomination CAPA 656 (poids moléculaire moyen d'environ 50 000 ; teneur en groupes hydroxyles équivalente à environ 2 mg de KOH par g) par INTEROX CHEMICALS.

L'indice de fluidité des granules obtenus comme à l'exemple 1R à 230°C sous 2,16 kg était de 0,62.

Les propriétés rhéologiques des granules obtenus mesurées à 230°C, suivant la méthode décrite ci-dessus, étaient les suivantes :
- $\eta(1)$ = 11 000 Pa.s
- $\eta(100)$ = 800 Pa.s
- $\lambda(1)$ = 18 000 Pa.s
- $\lambda(50)$ = 10 000 Pa.s

Comme on peut l'observer, la chute de la valeur de l'indice de fluidité est en réalité intégralement imputable à l'augmentation de la viscosité élongationnelle à bas gradient d'étirage, la viscosité en cisaillement demeurant inchangée, ce qui est bien l'effet recherché.

L'aptitude au calandrage de cette composition a été évaluée de la même manière qu'à l'exemple 1R.

L'aptitude au calandrage de la composition était tout à fait satisfaisante : bonne tenue du crêpe, pas de collage aux cylindres et rotation régulière du bourrelet.

Exemple 2

On a répété l'exemple 1, mais en y remplaçant la composition polyoléfinique utilisée par une composition comprenant
- 100 parties en poids d'un copolymère utilisé à l'exemple 1R
- 0,1 partie en poids du produit ADMER QF500
- 0,1 partie en poids d'un copolymère hydrolysé d'acétate de vinyle et d'éthylène, commercialisé par SOLVAY & Cie sous la dénomination CLARENE R, contenant 30 % molaires d'éthylène copolymérisé.

L'indice de fluidité à 230°C sous 2,16 kg de cette composition valait 0,65.

Les propriétés rhéologiques des granules obtenus mesurées à 230°C, suivant la méthode décrite étaient les suivantes :
- $\eta(1)$ = 11 000 Pa.s
- $\eta(100)$ = 800 Pa.s

- $\lambda(1)$ = 16 500 Pa.s
- $\lambda(50)$ = 10 500 Pa.s

L'aptitude au calandrage de cette composition a été évaluée de la même façon qu'à l'exemple 1 et elle est aussi bonne que celle de la composition de cet exemple.

Exemple 3

On a répété l'exemple 1, mais en y remplaçant la composition polyoléfinique utilisée par une composition comprenant :
- 100 parties en poids d'un copolymère de l'éthylène et du butène d'indice de fluidité, mesuré à 190°C sous 5 kg, égal à 0,45, commercialisé par SOLVAY & Cie sous la dénomination ELTEX B 5922 ;
- 0,1 partie en poids d'un polyéthylène greffé commercialisé sous la dénomination ADMER L 2000 par MITSUI PETROCHEMICAL INDUSTRIES
- 0,1 partie en poids du polycaprolactone utilisé à l'exemple 1.

Les propriétés rhéologiques des granules obtenus mesurées à 190°C, suivant la méthode décrite ci-dessus, étaient les suivantes :
- $\eta(1)$ = 25 000 Pa.s
- $\eta(100)$ = 1 500 Pa.s
- $\lambda(0,1)$ = 330 000 Pa.s
- $\lambda(10)$ = 84 000 Pa.s

Exemple 2R

Cet exemple est donné à titre de comparaison. On a répété l'exemple 3, si ce n'est qu'on a utilisé la polyoléfine ELTEX B 5922 seule.

Les propriétés rhéologiques des granules obtenus mesurées à 190°C, suivant la méthode décrite ci-dessus, étaient les suivantes :
- $\eta(1)$ = 25 000 Pa.s
- $\eta(100)$ = 1 500 Pa.s
- $\lambda(0,1)$ = 240 000 Pa.s
- $\lambda(10)$ = 84 000 Pa.s

La comparaison des résultats des exemples 3 et 2R montre à nouveau une augmentation sensible de la viscosité élongationnelle à faible gradient d'étirage ($0,1$ s$^{-1}$) de la composition polyoléfinique selon l'invention (exemple 3).

**Revendications**

1. Compositions polyoléfiniques comprenant une polyoléfine (A) et une combinaison polymérique (B) constituée (B1) d'une polyoléfine modifiée par greffage d'un monomère polaire et (B2) d'au moins un polymère porteur d'au moins une fonction réactive vis-à-vis du monomère polaire, caractérisées en ce qu'elles contiennent une quantité de combinaison polymérique (B) comprise entre 0,05 et 1 % en poids par rapport au poids de polyoléfine (A).

2. Compositions polyoléfiniques selon la revendication 1 caractérisées en ce que la polyoléfine (A) est choisie parmi les polymères du propylène et de l'éthylène.

3. Compositions polyoléfiniques selon les revendications 1 et 2 caractérisées en ce que le polymère (B1) est une polyoléfine greffée d'anhydride maléique.

4. Compositions polyoléfiniques selon les revendications 1 et 2 caractérisées en ce que le polymère (B2) est un polymère de lactone.

5. Compositions polyoléfiniques selon la revendication 4, caractérisées en ce que le polymère de lactone est un homopolymère de l'ε-caprolactone.

6. Compositions polyoléfiniques selon les revendications 1 et 2 caractérisées en ce que le polymère (B2) est choisi parmi les polymères hydrolysés d'un monomère vinylique hydrolysable.

7. Compositions polyoléfiniques selon la revendication 6 caractérisées en ce que le polymère (B2) est un copolymère de l'éthylène et de l'acétate de vinyle hydrolysé.

8. Compositions polyoléfiniques selon les revendications 1 à 7, caractérisées en ce que le rapport R entre la concentration molaire en macromolécules contenues dans le polymère (B2) et la concentration en monomères polaires portés par la polyoléfine modifiée (B1) est compris entre 0,2 et 5.

9. Utilisation des compositions polyoléfiniques selon l'une quelconque des revendications 1 à 8 pour la mise en oeuvre par calandrage.

10. Utilisation des compositions polyoléfiniques selon l'une quelconque des revendications 1 à 8 pour la mise en oeuvre par extrusion.

11. Utilisation des compositions polyoléfiniques selon l'une quelconque des revendications 1 à 8 pour la mise en oeuvre par thermoformage.

## Claims

1. Polyolefinic compositions comprising a polyolefin (A) and a polymeric combination (B) consisting (B1) of a polyolefin modified by grafting with a polar monomer and (B2) of at least one polymer bearing at least one functional group which is reactive towards the polar monomer, which are characterised in that they contain a quantity of polymeric combination (B) of between 0.05 and 1 % by weight relative to the weight of polyolefin (A).

2. Polyolefinic compositions according to Claim 1, characterised in that the polyolefin (A) is chosen from propylene and ethylene polymers.

3. Polyolefinic compositions according to Claims 1 and 2, characterised in that the polymer (B1) is a polyolefin grafted with maleic anhydride.

4. Polyolefinic compositions according to Claims 1 and 2, characterised in that the polymer (B2) is a lactone polymer.

5. Polyolefinic compositions according to Claim 4, characterised in that the lactone polymer is an ε-caprolactone homopolymer.

6. Polyolefinic compositions according to Claims 1 and 2, characterised in that the polymer (B2) is chosen from hydrolysed polymers of a hydrolysable vinyl monomer.

7. Polyolefinic compositions according to Claim 6, characterised in that the polymer (B2) is a copolymer of ethylene and of hydrolysed vinyl acetate.

8. Polyolefinic compositions according to Claims 1 to 7, characterised in that the ratio R of the molar concentration of macromolecules present in the polymer (B2) to the concentration of polar monomers carried by the modified polyolefin (B1) is between 0.2 and 5.

9. Use of the polyolefinic compositions according to any one of the Claims 1 to 8 for processing by calendering.

10. Use of the polyolefinic compositions according to any one of Claims 1 to 8 for processing by extrusion.

11. Use of the polyolefinc compositions according to any one of Claims 1 to 8 for processing by thermoforming.

## Patentansprüche

1. Polyolefin-Zusammensetzungen umfassend ein Polyolefin (A) und eine polymere Kombination (B), die (B1) aus einem Polyolefin, das durch Pfropfen eines polaren Monomers modifiziert wurde, und (B2) aus wenigstens einem Polymer, das wenigstens eine reaktive Funktion gegenüber dem polaren Monomer trägt, besteht, dadurch gekennzeichnet, daß sie eine Menge an polymerer Kombination (B) zwischen 0,05 und 1 Gew.-% bezogen auf das Gewicht des Polyolefins (A) enthalten.

2. Polyolefin-Zusammensetzungen nach Anspruch 1, dadurch gekennzeichnet, daß das Polyolefin (A) ausgewählt ist unter den Propylen- und Ethylen-Polymeren.

3. Polyolefin-Zusammensetzungen nach den Ansprüchen 1 und 2, dadurch gekennzeichnet, daß das Polymer (B1) ein mit Maleinsäureanhydrid gepfropftes Polyolefin ist.

4. Polyolefin-Zusammensetzungen nach den Ansprüchen 1 und 2, dadurch gekennzeichnet, daß das Polymer (B2) ein Lactonpolymer ist.

5. Polyolefin-Zusammensetzungen nach Anspruch 4, dadurch gekennzeichnet, daß das Lactonpolymer ein $\epsilon$-Caprolacton-Hompolymer ist.

6. Polyolefin-Zusammensetzungen nach den Ansprüchen 1 und 2, dadurch gekennzeichnet, daß das Polymer (B2) ausgewählt ist unter den hydrolysierten Polymeren eines hydrolysierbaren Vinylmonomers.

7. Polyolefin-Zusammensetzungen nach Anspruch 6, dadurch gekennzeichnet, daß das Polymer (B2) ein hydrolysiertes Ethylen- und Vinylacetat-Copolymer ist.

8. Polyolefin-Zusammensetzungen nach den Ansprüchen 1 bis 7, dadurch gekennzeichnet, daß das Verhältnis R zwischen der molaren Konzentration der in dem Polymer (B2) enthaltenen Makromoleküle und der Konzentration an den von dem modifizierten Polyolefin (B1) getragenen polaren Monomeren zwischen 0,2 und 5 beträgt.

9. Verwendung der Polyolefin-Zusammensetzungen nach einem der Ansprüche 1 bis 8 zum Einsatz durch Kalandrieren.

10. Verwendung der polyolefin-Zusammensetzungen nach einem der Ansprüche 1 bis 8 zum Einsatz durch Extrusion.

11. Verwendung der Polyolefin-Zusammensetzungen nach einem der Ansprüche 1 bis 8 zum Einsatz durch Thermoformung.